**Europäisches Patentamt**

**European Patent Office**

**Office européen des brevets**

(19)

(11)  **EP 1 086 994 B1**

(12)  **FASCICULE DE BREVET EUROPEEN**

(45) Date de publication et mention
de la délivrance du brevet:
**03.12.2003  Bulletin 2003/49**

(51) Int Cl.⁷: $C09C\ 1/00$, $C09C\ 3/06$

(21) Numéro de dépôt: **99870193.2**

(22) Date de dépôt: **22.09.1999**

(54) **Pigment de vanadate de bismuth résistant à la chaleur et procédé pour sa fabrication**

Hitzebeständiges Bismuthvanadat-Pigment und Verfahren zu seiner Herstellung

Heat-resistant bismuth vanadate pigment and process for its manufacture

(84) Etats contractants désignés:
**AT BE CH CY DE DK ES FI FR GB GR IE IT LI LU
MC NL PT SE**

(43) Date de publication de la demande:
**28.03.2001  Bulletin 2001/13**

(73) Titulaire: **Gebroeders Cappelle Naamloze
Vennootschap
8930 Menen (BE)**

(72) Inventeurs:
• **Vermoortele, Frank
59700 Marcq en Barquel (FR)**

• **Buyse, Emile Joseph
7700 Mouscron (BE)**

(74) Mandataire: **Van Malderen, Joelle et al
Office Van Malderen,
Place Reine Fabiola 6/1
1083 Bruxelles (BE)**

(56) Documents cités:
**US-A- 4 063 956**

**Description**

**Objet de l'invention**

La présente invention est relative à un pigment à base de vanadate de bismuth, dont la tenue à la chaleur est fortement améliorée.

L'invention concerne également le procédé d'obtention de ce pigment et l'application de celui-ci, notamment pour la coloration des matières plastiques, des peintures, des laques.

**Arrière-plan technologique et état de la technique**

Le vanadate de bismuth est utilisé entre autre comme pigment minéral jaune. On l'emploie pour colorer des plastiques et des peintures, également comme catalyseur pour l'oxydation des oléfines, comme pigment renforceur de contraste pour écran de télévision et comme indicateur réversible de température. C'est un composé chimique bien connu (DE422947 - US3843554 - US4115142 - JP62277485 - DE19733584).

Les pigments à base de vanadate de bismuth, purs ou modifiés, sont non toxiques, de teinte jaune vive, de grande force colorante et d'excellente opacité ; ils se dispersent facilement dans leur milieu d'utilisation. Cependant leur solidité, spécialement à la chaleur, est insuffisante; cela restreint leur emploi en matières plastiques ou en formulations élaborées ou usinées à chaud.

Un grand nombre de matières sont colorées avec des pigments : peintures, laques, encres, matières plastiques. En particulier les composés traités à haute température, tels que polyéthylène, polystyrène, polycarbonate, polypropylène, acrylnitrilbutadiènestyrène, sont obtenus par extrusion ou injection de la masse colorée, ramollie à la chaleur. L'utilisation de température assez élevée conduit à un changement de la teinte d'origine non souhaité (généralement un noircissement).

De nombreux procédés connus tentent d'améliorer les stabilités des pigments à la lumière, à la chaleur, aux agents chimiques. Ces procédés de stabilisation consistent en un enrobage, un dopage ou une modification du cristal pigmentaire.

La demande de brevet EP239526 décrit un procédé d'enrobage par une couche à base d'aluminium, de titane, de cérium, d'antimoine, de zirconium, de silicium, de phosphore, de zinc, à raison de 2 à 40%. Selon la demande de brevet DE4037878, la résistance des pigments aux acides, et spécialement à l'acide chlorhydrique, peut être améliorée par enrobage de phosphates de métaux tels que calcium, magnésium, aluminium, zinc, zirconium, titane, à raison de 2 à 20%. Dans la demande de brevet W09211205, on cite pour les pigments à base de silicovanadate et/ou de phosphovanadate de bismuth, des enrobages d'oxyde, d'hydrate, de silicate, de phosphate et de carbonate minéraux.

Selon le brevet US4063956, on augmente la tenue à la chaleur en matières thermoplastiques ainsi que la résistance aux agents chimiques, par enrobage d'une précouche minérale et ensuite d'une couche importante d'oxyde de silicium ; ainsi on applique d'abord une couche d'oxydes hydratés d'aluminium, de silicium, de titane, de bore, de tantale, de molybdène, de zinc, de manganèse, d'étain, d'hafnium, de thorium, de niobium, de baryum, de strontium, de nickel et/ou d'antimoine, avec une préférence pour l'aluminium, le silicium, le titane et le bore. Cette précouche sert à augmenter l'adhérence de la deuxième couche, constituée d'oxyde de silicium amorphe et dense ; la couche de silice agit principalement pour améliorer la résistance à la chaleur et aux acides.

On peut aussi réaliser dans un broyeur à billes un enrobage d'un pigment calciné ; on dépose une première couche de silice en milieu basique, et ensuite une deuxième couche de silice, éventuellement en présence de fluosilicate de magnésium, de silanes ou d'émulsion de cires de polyéthylène (EP271813).

Selon la demande de brevet DE3135281, on peut également enrober avec des couches d'oxydes de zirconium et de silicium pour améliorer les résistances à la lumière et à la chaleur. Dans le brevet US4115142, on améliore la solidité des pigments par enrobage d'une couche de silice ou de phosphate d'aluminium.

Dans le brevet EP723998, on améliore la stabilité de pigments de vanadate de bismuth par enrobage de composés à base de phosphates d'aluminium et de zinc ou d'oxydes de silicium et d'aluminium.

En général, on peut dire que tous les systèmes d'enrobage, préconisés pour améliorer les pigments à base de vanadate de bismuth purs ou modifiés, ressemblent aux procédés bien connus et éprouvés, appliqués à divers pigments minéraux : par exemple les dioxydes de titane, les jaunes de chrome, les orangés de molybdène, les oxydes de fer.

Il est bien connu que les pigments en poudre, séchés à plus de 100 °C présentent une surface moins réactive par perte des groupements hydroxyles. Or ce sont précisément ces groupes OH qui permettent un bon accrochage des couches d'enrobage. Par conséquent il est malaisé d'obtenir par enrobage une stabilisation suffisamment solide des pigments, en particulier ceux à base de vanadate de bismuth, et qui permette de les utiliser dans des matières plastiques ou des peintures et résines traitées à des températures élevées.

Il en est de même avec les procédés de dopage. Ainsi d'après le brevet US4026722 on obtient un pigment à base de vanadate de bismuth à solidité améliorée grâce à une cristallisation avec des oxydes de silicium et d'aluminium. Les quantités utilisées sont très importantes et dépassent même la quantité de vanadate de bismuth.

Selon le brevet GB2034342, on peut calciner des mélanges de phosphate de bismuth, de pentoxyde de vanadium et d'oxydes de zinc, calcium, baryum et magnésium.

Le brevet US4781761 décrit une stabilisation de pigment à base d'oxyde de titane par une première couche de silice amorphe et dense, dopée avec 10% d'oxyde de bore, et par une deuxième couche d'oxyde d'aluminium (2 à 8%).

Selon la demande de brevet DE3926870 on réduit la photochromie de pigments à base de vanadate de bismuth en les dotant d'une fine couche d'oxyde ou d'hydrate de fer trivalent (0,001 à 2%).

Selon la demande de brevet DE3906670, on peut augmenter la résistance à la chaleur de préparations contenant des pigments minéraux et organiques par dopage au bore (3 à 10% d'acide borique) ; le seul dérivé de bore, dont l'action est vraiment efficace, est l'acide borique ; le tétraborate de sodium (borax) ne convient pas aussi bien.

Dans les brevets DE3136279 et DE3409722, on traite avant calcination un mélange d'oxydes de zinc et de fer avec des composés de bore ($H_3BO_3$, $BPO_4$) à raison de 0.1 à 1%, ou avec des composés formant des phosphates d'alumine ($Al_2O_3$, $P_2O_5$, ...), afin d'obtenir des pigments bien cristallisés et à très faible teneur en chlorure.

Il était déjà connu que des composés chimiques à base d'hydroxydes, d'oxydes, de phosphates ou de borates, d'aluminium, d'antimoine, d'ammonium et de zinc peuvent rendre les matières plastiques organiques plus résistantes à la chaleur et même retarder leur combustion (brevets US5248337 - BE769799 - GB2262518). L'addition de ces produits au pigment lui-même et non pas à la matière thermoplastique permet d'améliorer un peu la solidité à la chaleur (brevet EP370082).

La préparation de mélanges-maîtres (masterbatches) avec des pigments traités à l'acide borique est généralement difficile (résidus non dispersés, non-homogénéité...). Toutefois le composé $H_3BO_3$ est nécessaire pour obtenir une certaine résistance à la chaleur. Ces procédés ne permettent pas d'obtenir des pigments à base de vanadate de bismuth qui soient simultanément faciles à utiliser et très résistants à la chaleur (300 °C).

## Buts de l'invention

La présente invention vise essentiellement à obtenir des pigments à base de vanadate de bismuth répondant à de hautes exigences de solidités en particulier à une excellente tenue à la chaleur.

Un autre but de la présente invention vise à fournir un pigment à base de vanadate de bismuth, qui puisse être utilisé aisément dans des matières soumises à des hautes températures.

Un but complémentaire de la présente invention consiste à fournir un procédé permettant un accrochage solide et efficace des couches d'enrobage sur un cristal pigmentaire à base de vanadate de bismuth.

## Eléments caractéristiques de l'invention

L'invention concerne un pigment à base de vanadate de bismuth présentant une tenue à la chaleur améliorée, caractérisé en ce qu'il est enrobé de plusieurs couches de composés minéraux en plusieurs étapes successives, la dernière de ces couches étant à base d'un composé de zinc et de bore.

De préférence le pigment est préenrobé par au moins une première couche de composés minéraux, choisis parmi les hydrates, oxydes, silicates, carbonates, phosphates, borates des éléments choisis dans le groupe formé par le titane, l'aluminium, le zinc, l'antimoine, le silicium, le bore, le calcium, le zirconium, le niobium et les terres rares, en particulier le cérium, le lanthane, le néodyme, le praséodyme, le samarium, l'yttrium ou un mélange de ceux-ci.

De préférence, le pigment comporte une première couche d'un ou plusieurs dépôts d'oxydes, d'hydrates, de carbonates et /ou de phosphates des éléments choisis dans le groupe formé par le titane, le zirconium, l'aluminium, le calcium et les terres rares.

Sur le pigment pourvu d'une première couche, on dépose en deuxième lieu une ou plusieurs couches d'un mélange d'oxyde et/ou d'hydrate de silicium selon des procédés bien connus, par exemple précipitation à chaud d'une solution de silicate alcalin en diminuant le pH par addition programmée d'un acide minéral dilué.

Généralement l'enrobage du pigment par ces dépôts successifs de composés minéraux représente de 0,1 à 40% du pigment.

Des traitements complémentaires peuvent encore éventuellement être appliqués sur le pigment ainsi stabilisé. On peut rendre le pigment moins poussiéreux en le traitant avec des agents antimottants à sec ou en pâte: par exemple polyalcools, polyfluoréthylène, esters d'acides aromatiques, silicone et autres surfactifs et émulgateurs; on peut aussi les passer dans des presses et granulateurs. Il est aussi possible d'utiliser des agents améliorant l'aspect et la mise en oeuvre, tels que les alcools ou polyalcools à longue chaîne aliphatique, les amines grasses, les résines et différents types d'agents surfactifs anioniques, cationiques ou nonioniques.

Un pigment, à base de vanadate de bismuth préenrobé d'une première couche à base d'aluminium, de phosphore, de titane, de calcium, de terres rares à raison de 1 à 5%, puis enrobé d'une deuxième couche à base de silicium à raison de 5 à 25%, présente une certaine solidité à la chaleur, que l'on peut encore un peu améliorer par addition d'acide borique à raison de 1 à 10%. On obtient alors un pigment avec, par exemple, une solidité à la chaleur dans le polyéthylène d'environ 250 °C (delta E* = plus petit ou égal à 3,0).

D'une façon étonnante et inattendue, on améliore encore notablement la solidité à la chaleur d'un pigment à base de vanadate de bismuth, pour autant que l'on précipite sur la couche à base d'oxyde de silicium une couche supplémentaire à base de 1 à 10% de composés de bore et de zinc, qui forment théoriquement un borate de zinc hydraté.

Selon la littérature scientifique, les borates de zinc hydratés sont obtenus par réaction en milieu aqueux de sels de zinc solubles et de borates de métaux alcalins ou d'acide borique selon une réaction chimique du type:

$$2\ ZnO + 2\ H_2SO_4 \rightarrow 2\ ZnSO_4 + 2\ H_2O$$

$$2\ ZnSO_4 + 2\ Na_2B_4O_7 \rightarrow 2\ ZnO.3B_2O_3.xH_2O + 2\ Na_2SO_4 + 2\ H_3BO_3$$

(Il n'est pas tenu compte de l'eau de cristallisation des réactifs). Si on augmente la température de réaction, la teneur en eau d'hydratation (x) diminue: voir par exemple les brevets US2405366-3126352-3649172 et WO9310045. Des renseignements au sujet de l'obtention, des propriétés et de l'emploi des borates de zinc sont mentionnés notamment dans:

> Mellor's Comprehensive Treatise on Theoritical Chemistry - Supplement, Vol. V, Part A, 572... (1980)
> Uhlmann's Encyclopedia of Industrial Chemistry, Vol. A4, 276... (1985)
> H.A. Lehman et al., Ueber wasserhaltige Zinkborate, Z. für anorg. Und allg. Chem., Vol. 354 n°1,37-43 (1967)
> F. Bellingham, Zinc borate in intumescent paints, Polym. Paint Col. J., Vol. 182 n°4319-627-8 (1992).

On obtient alors par exemple une solidité à la chaleur dans le polyéthylène d'environ 300 °C (dE* = plus petit ou égal à 3,0). Une telle résistance n'est jamais obtenue avec d'autres composés à base de borates d'autres métaux (Na, Al, Mg, Ba...). L'addition de borate de zinc dans le mélange-maître, à la place de la précipitation sur le pigment, ne fournit pas une résistance supérieure à 250-260 °C.

Cet enrobage spécial par une couche finale d'un composé à base de borate de zinc fournit un pigment de vanadate de bismuth qui s'incorpore de plus très facilement dans les mélanges-maîtres de plastiques colorés. On combine ainsi la facilité de réalisation d'un mélange-maître avec une résistance à la chaleur très élevée ; cela n'est jamais obtenu avec d'autres procédés, tels que l'application de couches d'oxyde de bore, d'oxyde d'antimoine, d'oxyde d'aluminium, de composés de magnésium ou de bore.

Un autre avantage évident de la facilité de dispersion du pigment obtenu est l'absence de grains dans les formulations pigmentées.

L'invention concerne aussi le procédé d'obtention d'un pigment à base de vanadate de bismuth, selon lequel l'enrobage est réalisé à la surface du cristal pigmentaire, réempâté très finement en milieu aqueux à chaud, et comporte au moins un composé minéral. Un dernier aspect de l'invention concerne l'application du pigment selon l'invention, pour colorer des matières plastiques, des résines, des laques et des revêtements industriels élaborés ou usinés à haute température.

## Description d'une forme d'exécution préférée de l'invention

L'invention concerne un pigment à base de vanadate de bismuth, amélioré très sensiblement par l'enrobage de composés minéraux bien particuliers. D'une façon inattendue on obtient une excellente résistance des pigments ainsi traités. Ce degré de résistance n'est jamais obtenu par les procédés de la technique antérieure.

Le traitement du pigment se fait de la manière suivante en trois étapes obligatoires :

1e étape : enrober le pigment avec un revêtement stabilisant à base d'oxydes ou d'hydrates de titane, de terres rares, d'aluminium, de phosphore, de calcium, selon une technique éprouvée et connue.

2e étape : remettre le pigment en suspension aqueuse avec une source de silice que l'on dépose à température élevée (60-100 °C) par addition d'acide, selon une technique éprouvée et connue.

3e étape : précipiter finalement un composé à base de borate de zinc à partir de sels de zinc et de bore.

Cette troisième étape est déterminante pour l'obtention d'un pigment de vanadate de bismuth à résistance élevée à la chaleur. Si on l'omet, si on l'utilise sans les deux autres étapes, ou si l'on utilise d'autres composés chimiques, l'effet attendu n'est pas obtenu. De plus, il est nécessaire de suivre l'ordre indiqué pour les trois étapes, et on ne peut en omettre aucune : à ce moment-là on obtient un effet supérieur à ce qu'on pourrait attendre de chacune des étapes prises à part.

Ainsi on pourrait utiliser des oxydes ou hydrates d'aluminium (brevet US4063956) ou précipiter la silice avec des oxyde ou hydrate de bore (brevet US4784761), mais les résultats obtenus sont nettement moins bons. On pourrait aussi réaliser un mélange physique d'un borate de zinc et d'un pigment de vanadate de bismuth traité d'une façon connue avec de la silice (US3.649.172) dans des proportions 10:90 à 1:99. Dans ce cas le degré de résistance à la chaleur obtenu selon le procédé de l'invention n'est jamais atteint.

Comme source de bore on peut utiliser les métaborates et les tétraborates des métaux alcalins, principalement les tétraborates de sodium et de potassium $Na_2B_4O_7.10H_2O$, $K_2B_4O_7.4H_2O$, $Na_2B_4O_7.5H_2O$, ainsi que l'acide borique $H_3BO_3$.

Comme source de zinc on peut utiliser les sels solubles de zinc, par exemple l'acétate $(CH_3COO)_2 Zn.2H_2O$, le chlorure $ZnCl_2$, le nitrate $Zn(NO_3)_2.6H.O$, le sulfate $ZnSO_4.7H_2O$, ainsi que l'oxyde de zinc ZnO pour autant qu'on le dissolve préalablement dans la quantité adéquate d'acide '(acétique, nitrique, chlorhydrique, sulfurique).

Les exemples suivants servent à illustrer l'invention.

**Exemples**

*Exemple 1*

Au départ on prend un pigment de vanadate de bismuth contenant 1 à 10% de couches d'enrobage à base d'oxydes, d'hydrates, de phosphates, de carbonates d'aluminium, de titane, de calcium, de terres rares.

Dans un disperseur contenant 0,75 l d'eau, on ajoute sous agitation 100 g de pigment de vanadate de bismuth. On agite très vigoureusement pendant 2 à 3 heures pour obtenir une bonne dispersion.

On coule cette suspension dans un réacteur de 5 litres et on règle le volume à 3 litres par addition d'eau. Sous agitation constante on élève la température à 90 °C et l'on ajuste le pH à 9,0. La température de 90 °C est maintenue tout au long de la fabrication. On ajoute ensuite en 45 minutes 0,2 l d'une solution aqueuse basique de silicate de soude (contenant 32 g de $SiO_2$). Après avoir agité 30 minutes, le pH étant égal à 10,0, on laisse couler goutte à goutte durant une période de 4 h environ 0,4 l d'une solution aqueuse diluée d'acide sulfurique à 3,7%. On veille à ce que le pH de la suspension ne soit pas inférieur à 7,0-7,2. Finalement on agite encore pendant 30 minutes. On obtient ainsi un pigment de référence revêtu d'une précouche (2,5 à 3%) et d'une couche de silice (25 à 30%). Le pigment est obtenu sous forme de poudre après filtration, lavage, séchage et broyage.

*Exemple 2*

Un pigment de vanadate de bismuth est préparé suivant le mode opératoire de l'exemple 1, mais après l'agitation finale de 30 minutes, on poursuit la fabrication en ajoutant en 15 minutes une solution de 10 g de nitrate de zinc dans 0,1 l d'eau. Ensuite on ajoute encore 9,6 g de tétraborate de sodium (borax) et l'on agite 30 minutes. Le pH est alors d'environ 7,0. Après filtration, lavage, séchage et broyage on obtient un pigment de vanadate de bismuth dont la couche de silice est revêtue de zinc et de bore.

*Exemple 3*

Un pigment de vanadate de bismuth est préparé suivant le mode opératoire de l'exemple 2, mais on y remplace les 9,6 g de borax par 6,25 g d'acide borique. Après l'agitation de 30 minutes on obtient un pH voisin de 5,5. On neutralise en 30 minutes avec une solution aqueuse à 10% de soude caustique pour obtenir un pH final de 7,0-7,2.

Après filtration, lavage, séchage et broyage, on obtient un pigment de vanadate de bismuth dont la couche de silice est revêtue de zinc et de bore.

*Exemple 4*

On reprend le mode opératoire de l'exemple 3, mais on y remplace les 10 g de nitrate de zinc par 4,6 g de chlorure de zinc.

On obtient à nouveau un pigment de vanadate de bismuth dont la couche de silice est revêtue de zinc et de bore.

*Exemple 5*

Un pigment de vanadate de bismuth est préparé suivant le mode opératoire de l'exemple 2, mais on y remplace les 10 g de nitrate de zinc par 8, 6 g de nitrate de magnésium.

On obtient un pigment de vanadate de bismuth dont la couche de silice est revêtue de magnésium et de bore.

*Exemple 6*

Dans un mélangeur de poudres, on réalise un mélange physique de 100 g du pigment obtenu selon le mode opératoire de l'exemple 1 avec 5 g de l'un ou l'autre des composés suivants à base de bore : borate de zinc, borate de baryum, acide borique.

On obtient de la sorte un pigment de vanadate de bismuth recouvert d'une couche de silice et qui est intimement mélangé à sec avec :

a) 5% de borate de zinc $2ZnO.3B_2O_3.3,5H_2O$
b) 5% de borate de baryum $BaB_2O_4.H_2O$
c) 5% d'acide borique $H_3BO_3$.

*Exemple 7 (méthode d'examen en matières plastiques)*

La mesure de la résistance à la chaleur des pigments préparés selon la présente invention est faite de la manière suivante. On réalise un prémélange en mixant 60% de pigment à base de vanadate de bismuth avec 30% de polyéthylène linéaire à basse densité (p.e. LL6201RQ d'Exxon) et 10% de cire de polyéthylène (p.e. AC8A). Ce prémélange est versé dans une extrudeuse à double vis (p.e. Collin) tournant à 300 T/min et chauffée à 150 °C. Le tout est extrudé, refroidi et granulé. On obtient ainsi un mélange-maître que l'on dilue dans du polyéthylène à haute densité (p.e. ELTEX A4090) afin d'obtenir des granulés de mélange-maître dilué avec un taux de pigmentation de 0,5%. Ensuite les granulés sont passés dans une presse à injection à des températures variant de 200 °C à 300 °C ou plus, avec des temps de rétention de 30 sec à 200 °C et de 5 minutes à 200, 210, 220, .... 300 °C ou plus. On injecte dans une moule qui fournit des éprouvettes de plastique coloré dont on détermine le noircissement par mesure spectrophotocolorimétrique, en prenant comme standard de comparaison l'éprouvette de 30 sec à 200 °C. La température de résistance est obtenue lorsque le seuil de dE* = 3,0 unités est dépassé(DIN 53772).

Les résultats d'essais de résistance à la chaleur sont repris dans le Tableau I annexé.

Les valeurs de ce Tableau illustrent les excellentes résistances à la chaleur des exemples 2, 3 et 4, réalisés selon la forme d'exécution préférée de l'invention. Les exemples 5 et 6b montrent que le zinc ne peut pas être remplacé par d'autres métaux, tels que le magnésium ou le baryum par exemple. L'exemple 6c montre que le bore sans zinc n'est pas aussi efficace. De la même façon, l'exemple 6a montre que l'addition purement physique de borate de zinc n'est pas aussi valable que le procédé de l'invention où les sels de zinc et de bore sont précipités à la dernière étape.

Tableau I

| ΔE* | 200°C | 230°C | 240°C | 250°C | 260°C | 270°C | 280°C | 290°C | 300°C | Température de résistance |
|---|---|---|---|---|---|---|---|---|---|---|
| Exemple 2 | 0,92 | 0,73 | | | 0,65 | 0,78 | 1,40 | 1,90 | 2,90 | 300°C |
| Exemple 3 | 0,60 | 0,92 | | | 1,70 | 1,21 | 1,39 | 2,26 | 2,80 | 300°C |
| Exemple 4 | 0,62 | 0,40 | | | 1,17 | 1,29 | 1,50 | 1,71 | 3,01 | 300°C |
| Exemple 5 | 0,51 | 1,36 | | 2,87 | 5,64 | | | | | 250°C |
| Exemple 6a | 0,93 | 0,63 | | 1,71 | 2,69 | 3,30 | | | | 260°C |
| Exemple 6b | 0,36 | 0,63 | 2,40 | 2,65 | 3,37 | | | | | 250°C |
| Exemple 6c | 0,38 | 1,07 | | 1,92 | 2,85 | 4,33 | | | | 260°C |

EP 1 086 994 B1

**Revendications**

1. Pigment à base de vanadate de bismuth de teinte jaune vif clair à orangé présentant une résistance, en particulier une résistance à la chaleur, améliorée, **caractérisé en ce qu'**il est enrobé de plusieurs couches de composés minéraux en plusieurs étapes successives, la dernière couche étant à base d'un composé de zinc et de bore susceptible d'être obtenu par précipitation de sels de zinc et de bore.

2. Pigment selon la revendication 1, **caractérisé en ce qu'**il est stabilisé dans la première couche avec un ou plusieurs composés de titane, de calcium, de terres rares, d'aluminium, de phosphore, de silicium, de bore, de zinc, ou par un mélange de ceux-ci.

3. Pigment selon la revendication 1, **caractérisé en ce qu'**il est stabilisé dans la deuxième couche principalement avec des composés à base de silicium.

4. Pigment selon l'une quelconque des revendications précédentes, **caractérisé en ce qu'**il comprend entre 0,1 et 40%, de préférence de 1 à 35% de composés minéraux d'enrobage et de stabilisation.

5. Procédé d'obtention d'un pigment selon l'une quelconque des revendications 1 à 4, **caractérisé en ce que** la stabilisation du pigment s'effectue par le dépôt de plusieurs couches d'enrobage à base de composés minéraux, sur la surface du cristal pigmentaire, en plusieurs étapes successives, la dernière étape de stabilisation comportant un enrobage à base d'un composé de zinc et de bore obtenu par précipitation de sels de zinc et de bore, l'enrobage représentant 1-10% du poids du pigment.

6. Application du pigment selon l'une quelconque des revendications 1 à 4, pour la coloration des matières plastiques, des résines et des peintures industrielles.

**Claims**

1. Pigment based on bismuth vanadate with a light bright yellow to orange colour exhibiting resistance, in particular an improved resistance to heat, **characterised in that** it is coated with several layers of inorganic compounds in several successive steps, the last layer being based on a zinc and boron compound that can be obtained by precipitation of zinc and boron salts.

2. Pigment according to claim 1, **characterised in that** it is stabilised in the first layer with one or more compounds of titanium, calcium, rare earths, aluminium, phosphorus, silicon, boron, zinc or by a mixture of these.

3. Pigment according to claim 1, **characterised in that** it is stabilised in the second layer mainly with silicon-based compounds.

4. Pigment according to any one of the preceding claims, **characterised in that** it comprises between 0.1 and 40%, preferably from 1 to 35% of inorganic coating and stabilising compounds.

5. Process for obtaining a pigment according to any one of claims 1 to 4, **characterised in that** the pigment is stabilised by the deposit of several coating layers based on inorganic compounds on the surface of the pigment crystal in several successive steps, the last stabilising step comprising a coating based on a zinc and boron compound obtained by precipitation of zinc and boron salts, the coating representing 1 to 10% of the pigment weight.

6. Application of the pigment according to any one of claims 1 to 4 for colouring plastics, industrial paints and resins.

**Patentansprüche**

1. Pigment auf der Basis von Wismutvanadat mit einer vom leuchtenden Hellgelb bis zum Gelborange gehenden Färbung, welches eine verbesserte Beständigkeit aufweist, insbesondere eine verbesserte Wärmebeständigkeit, **dadurch gekennzeichnet, dass** es in mehreren aufeinander folgenden Schritten mit mehreren Schichten von mineralischen Verbindungen ummantelt wird, wobei die letzte Schicht auf der Basis einer Verbindung von Zink und Bor beruht, welche in der Lage ist, durch eine Ausfällung von Zink- und Borsalzen erzielt zu werden.

2. Pigment gemäß Anspruch 1, **dadurch gekennzeichnet, dass** es in der ersten Schicht mit einer oder mit mehreren Verbindungen von Titan, Calcium, seltenen Erden, Aluminium, Phosphor, Silizium, Bor, Zink, oder mit einer Mischung dieser Verbindungen stabilisiert wird.

3. Pigment gemäß Anspruch 1, **dadurch gekennzeichnet, dass** es in der zweiten Schicht im wesentlichen mit Verbindungen auf der Basis von Silizium stabilisiert wird.

4. Pigment gemäß irgendeinem der vorhergehenden Ansprüche, **dadurch gekennzeichnet, dass** es zwischen 0,1 und 40 %, vorzugsweise zwischen 1 und 35 % an mineralischen Verbindungen für die Ummantelung und die Stabilisierung enthält.

5. Verfahren zur Erzeugung eines Pigmentes gemäß irgendeinem der Ansprüche 1 bis 4, **dadurch gekennzeichnet, dass** die Stabilisierung des Pigmentes durch das Auftragen von mehreren Ummantelungsschichten auf der Basis von mineralischen Verbindungen auf der Oberfläche des pigmentierten Kristalls durchgeführt wird, dies in mehreren aufeinander folgenden Schritten, wobei der letzte Schritt der Stabilisierung eine Ummantelung auf der Basis einer Verbindung von Zink und Bor umfasst, welche durch eine Ausfällung von Zink- und Borsalzen erzielt worden ist, wobei die Ummantelung 1-10 % des Gewichtes des Pigmentes ausmacht.

6. Anwendung des Pigmentes gemäß irgendeinem der Ansprüche 1 bis 4 für die Färbung von Plastikmaterialien, von Harzen und von Industrielacken.